# FASCICULE DE BREVET EUROPEEN

(11) **EP 2 208 206 B1**
(45) Date de publication et mention de la délivrance du brevet: **15.06.2011**
(21) Numéro de dépôt: 08805116.4
(22) Date de dépôt: 07.10.2008
(51) Int. Cl.: G21C 17/06

(54) **DISPOSITIF D'INSPECTION D'UN ASSEMBLAGE DE CRAYONS Á COMBUSTIBLE DANS UNE PISCINE D'UNE INSTALLATION NUCLÉAIRE, PROCÉDÉ D'INSPECTION CORRESPONDANT**
EINRICHTUNG ZUR UNTERSUCHUNG EINER BRENNSTABBAUGRUPPE IM POOL EINER KERNANLAGE UND ENTSPRECHENDES UNTERSUCHUNGSVERFAHREN
DEVICE FOR INSPECTING A FUEL ROD ASSEMBLY IN THE POOL OF A NUCLEAR PLANT AND CORRESPONDING INSPECTION METHOD

(30) Priorité: 08.10.2007 FR 0758144
(43) Date de publication de la demande: 21.07.2010
(73) Titulaire: Electricité de France, 75008 Paris (FR)
(72) Inventeur: CAUVIN, Richard, F-37140 Benais (FR); TESSIER, Denis, F-45200 Amilly (FR)
(74) Mandataire: Texier, Christian
(86) Numéro de dépôt international: PCT/EP2008/063414
(87) Numéro de publication internationale: WO 2009/047256

(56) Documents cités:
- EP-A- 0 123 597
- FR-A- 2 601 180
- JP-A- 2 259 401
- US-A- 3 621 580

## Description

### DOMAINE TECHNIQUE GENERAL

La présente invention concerne un dispositif selon le préambule de la revendication 1.

Elle concerne également un procédé d'inspection mettant en oeuvre le dispositif.

### ETAT DE L'ART

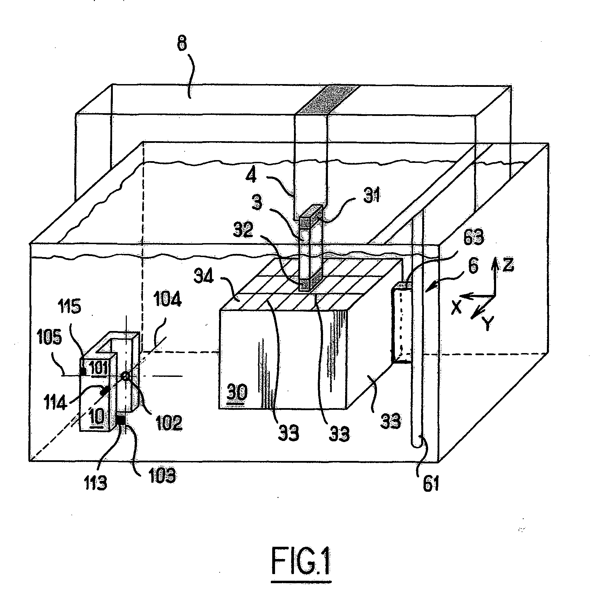

La figure 1 représente schématiquement un des râteliers 30 de stockage d'assemblages 3 de crayons de combustible, disposé dans une piscine 1 d'entreposage d'une installation nucléaire de type REP (Réacteur à Eau Pressurisée).

Chaque assemblage 3 forme une unité élémentaire de combustible, et doit être placé dans un réacteur nucléaire pour pouvoir produire de l'énergie. Chaque assemblage 3 est formé d'une série de grilles de support et de séparation, dans lesquelles sont disposés verticalement des crayons cylindriques contenant des pastilles d'oxyde d'uranium enrichi. Chaque assemblage a généralement une section droite carrée (d'environ 200 mm de côté) regroupant, pour les REP exploités par EDF, 264 crayons (géométrie 17 x 17) et une hauteur de l'ordre de 4 à 5 m. Des embouts 31 et 32 forment respectivement le sommet et la base de l'assemblage.

Les râteliers 30, situés au fond de la piscine 1, comportent des alvéoles 34 avec des parois 33 de séparation, de sorte qu'aucune réaction nucléaire n'ait lieu dans la piscine 1 lorsque les assemblages 3 sont placés dans les râteliers 30. La piscine dite d'entreposage 1 constitue un sas de stockage temporaire pour les assemblages 3 neufs en attente de chargement dans le réacteur nucléaire, et pour les assemblages usés en attente d'évacuation (retraitement, stockage longue durée, etc.). La piscine 1 est par ailleurs remplie d'eau 2 borée, pour éviter toute réaction nucléaire et tout rayonnement vers l'extérieur de la piscine.

Pour déplacer les assemblages dans la piscine, par exemple pour leur chargement dans le réacteur ou leur déchargement du réacteur, ou pour les examiner, un grappin 4 mobile, relié à un pont passerelle 8 situé au-dessus de la piscine, permet de saisir les assemblages 3 par leur sommet et de les sortir des alvéoles 34.

Un « descenseur » 6 permet la mise en eau des assemblages neufs. Le descenseur 6 comporte notamment un panier 63, dont la longueur est en général au moins égale à la longueur d'un assemblage 3, et dans lequel est placé un assemblage ; ce panier est monté sur un rail vertical 61 et actionné par un treuil qui permet le déplacement selon un axe Z parallèle à un axe longitudinal de l'assemblage.

Une machine de transfert permet quant à elle de transporter les assemblages de combustible du réacteur vers la piscine (et réciproquement). Une fosse d'évacuation permet ensuite le transport des assemblages vers les usines de retraitement.

Pour étudier ou confirmer le comportement sous irradiation des assemblages de combustible, on souhaite pouvoir inspecter les assemblages, notamment par métrologie.

La figure 1 montre très schématiquement un dispositif 10 d'inspection connu.

Le dispositif 10 est posé au fond de la piscine ou accroché à la paroi de la piscine. Il comporte principalement une enceinte 101 verticale un peu plus grande que l'assemblage, enceinte ouverte sur un côté pour permettre les inspections. L'assemblage de combustible est placé dans cette enceinte 101 à l'aide du pont passerelle et du grappin 4. Une caméra vidéo 102, montée sur l'enceinte 101, peut être déplacée selon les trois axes (vertical 103, avant / arrière 105, gauche / droite 104), pour permettre de visualiser une face de l'assemblage. La caméra est déplacée grâce à des moteurs pas à pas 113, 114 et 115 dont le mouvement est indexé. Un dispositif placé en bas de l'enceinte permet la rotation de l'assemblage pour permettre l'examen successif des quatre faces.

Pour effectuer l'inspection d'un assemblage, on retire l'assemblage 3 d'une alvéole du râtelier 30 grâce au pont passerelle 8, puis on place l'assemblage 3 dans l'enceinte 101. Les mesures sont effectuées en déplaçant la caméra 102 dans l'espace afin de viser successivement les deux extrémités de chaque longueur à mesurer ; l'indexation des moteurs pas à pas a été préalablement étalonnée sur un étalon de longueur de référence ; la distance parcourue peut donc être déduite des informations données par les moteurs 113, 114 et 115.

EP 0 123 597 divulgue un exemple de dispositif dont le principe de fonctionnement est proche du dispositif connu décrit ci-dessus.

Le dispositif de EP 0 123 597 comporte des moyens de support de l'assemblage à examiner, des moyens d'examen de l'assemblage, comportant une caméra, et des moyens de déplacement des moyens d'examen.

Comme pour le dispositif de la figure 1, l'assemblage combustible doit être monté dans les moyens supports, préalablement aux mesures, grâce par exemple au grappin déjà décrit.

Les moyens de déplacement des moyens d'examen comportent un chariot mobile, une colonne solidaire du chariot, et une console déplaçable verticalement le long de la colonne. Ces moyens de déplacement spécifiques sont montés à proximité des moyens de support.

Des compteurs de déplacement sont associés au chariot et à la console, afin de quantifier les déplacements de la caméra.

Les mesures nécessitent une étape préalable d'étalonnage des compteurs de déplacement. L'étalonnage s'effectue grâce à l'observation, par la caméra, d'une graduation de référence fixée sur les moyens de support à proximité de l'assemblage.

Une fois les compteurs de déplacement étalonnés, la mesure est effectuée en visant successivement, à l'aide de la caméra, les deux extrémités de la longueur à mesurer sur l'assemblage : le déplacement des moyens de déplacement fournit alors la longueur à mesurer.

Les dispositifs connus de l'état de l'art présentent cependant des inconvénients.

Les dispositifs connus demandent l'apport de matériels spécifiques, supplémentaires par rapport à un fonctionnement normal de l'installation nucléaire. Ces matériels spécifiques sont notamment l'enceinte 101 ou les moyens de support de EP 0 123 597, ainsi que les moyens de déplacement des moyens d'examen. De tels moyens peuvent aussi être installés à demeure, nécessitant alors un investissement pour chaque réacteur.

Les dispositifs connus sont ainsi relativement encombrants. Leur présence en piscine peut gêner certaines opérations de manutention, comme l'évacuation du combustible usé par exemple.

L'enceinte ou les moyens de support sont de plus lourds. Ils doivent être transportés sur l'installation nucléaire, et installés en piscine d'entreposage du combustible usé. Le transport et l'installation sont des opérations coûteuses qui nécessitant un temps important (une à deux semaines).

Les mesures sont longues à effectuer, car la caméra doit se déplacer pour explorer chacun des composants dont on veut mesurer la longueur. La phase d'étalonnage des compteurs de déplacement est également longue à effectuer.

Le dispositif comporte beaucoup d'éléments et n'est pas facile à décontaminer.

Le coût du dispositif est de plus relativement élevé.

Comme les inspections sont généralement réalisées pendant le renouvellement du combustible, avec un réacteur arrêté, la durée de l'inspection peut avoir un impact financier important sur le coût d'exploitation du réacteur.

### PRESENTATION DE L'INVENTION

L'invention propose de pallier au moins deux de ces inconvénients, à savoir le coût et la durée de mise en oeuvre, sans dégrader la précision de mesure.

A cet effet, on propose selon l'invention un dispositif d'inspection selon la revendication 1.

L'invention est avantageusement complétée par les caractéristiques des revendications 2 à 11.

L'invention concerne également un procédé de mise en oeuvre d'un dispositif selon l'invention.

A cet effet, on propose selon l'invention un procédé d'inspection selon la revendication 12.

La présente invention présente de nombreux avantages.

L'invention ne demande que peu de matériel spécifique. Il n'y a pas à prévoir des moyens de support lourds et encombrants, ni des moyens de déplacement du capteur d'images.

En effet, la fonction de support de l'assemblage combustible (sur lequel est fixé de façon amovible un dispositif d'inspection selon l'invention) pendant les prises de vue est effectuée par le pont passerelle, qui est un matériel déjà présent dans une installation nucléaire.

De plus, les moyens de déplacement du capteur d'images sont constitués par le descenseur, qui est un matériel déjà présent dans une installation nucléaire.

La perche portant la graduation de référence du dispositif est quant à elle légère et peu encombrante.

Le dispositif se monte et se démonte rapidement (environ 4h). Le dispositif peut être installé en moins d'une heure, car sa manipulation est aisée : la perche est légère et mobile, et la fixation amovible de la perche sur l'assemblage s'effectue en quelques minutes. Cette fixation amovible est facilitée par l'utilisation d'un flotteur, qui facilite la mise en place de la perche sur l'assemblage, mais qui rend également la perche libre de toute attache puisqu'elle flotte lorsqu'elle n'est pas fixée à l'assemblage.

La précision de fixation de la perche sur l'assemblage (1 à 2mm) permet une bonne précision des mesures.

Il se décontamine facilement.

Il est peu onéreux.

Les prises de vue sont rapidement effectuées, ce qui fait que les assemblages ne sont immobilisés que peu de temps. En effet, pour effectuer une prise de vue, il suffit de lever, grâce au grappin, l'assemblage hors de son alvéole et de le placer devant le dispositif de prise de vue (à une distance de l'ordre de 2 m). Pendant la prise de vue, l'assemblage est toujours immergé dans la piscine, mais est suspendu au pont passerelle. Chaque assemblage est ainsi immobilisé moins de quatre heures pour un nombre total de points de prise de vue d'environ 850 (sur les quatre faces de l'assemblage).

Les mesures sont effectuées en dififéré, et directement sur les prises de vue de l'assemblage et de la graduation de référence, ce qui augmente la précision des mesures. En effet, du fait que les moyens de déplacement du capteur d'images sont constitués par le descenseur de la piscine, la mesure fondée sur des compteurs de déplacement n'est plus possible.

En revanche, la phase d'étalonnage préalable est supprimée, ce qui signifie un gain de temps supplémentaire pour effectuer les prises de vues. De plus, comme les mesures sont effectuées en différé sur les prises de vue et non plus en direct par déplacement de la caméra, le temps d'immobilisation de l'assemblage dans la piscine est fortement réduit : il se résume en fait au temps des prises de vue en séquence.

Le dispositif permet une inspection complète de l'assemblage. Il permet notamment de déterminer facilement et directement :
- la distance entre les embouts,
- la distance entre les crayons périphériques et chaque embout,
- la longueur des crayons périphériques,
- la hauteur des ressorts de l'embout supérieur,
- le déport entre les embouts,
- l'altitude de chaque grille,
- la flèche de chaque grille,
- la largeur de chaque grille, et
- l'espace entre les crayons.

Les précisions de mesure sont de l'ordre de plus ou moins 1 mm pour les grandes distances (de 4 à 5 m) et de plus ou moins 0,25 mm pour les petites distances (inférieures à 100 mm). Ceci est permis par l'utilisation d'un capteur d'images de grande précision (appareil photographique numérique au lieu, dans l'art antérieur, d'une caméra de plus faible résolution associée à des compteurs de déplacement).

Les prises de vue sont assurées dans la piscine, sur les assemblages irradiés, à des taux de combustion pouvant dépasser 60 GWj/tU : la protection vis-à-vis de l'irradiation est assurée par une épaisseur d'eau borée de plus de 2 mètres entre le dispositif et l'assemblage de combustible suspendu au pont passerelle.

Les prises de vue peuvent être réalisées jusqu'à des profondeurs de 12 mètres, en eau borée, à des températures comprises entre 15°C et 50°C.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1, déjà commentée, représente schématiquement une piscine d'une installation nucléaire contenant des assemblages de combustible et un dispositif connu d'inspection ; et
- la figure 2 représente schématiquement un dispositif selon l'invention.

Sur l'ensemble des figures, les éléments similaires portent des références numériques identiques.

### DESCRIPTION DETAILLEE

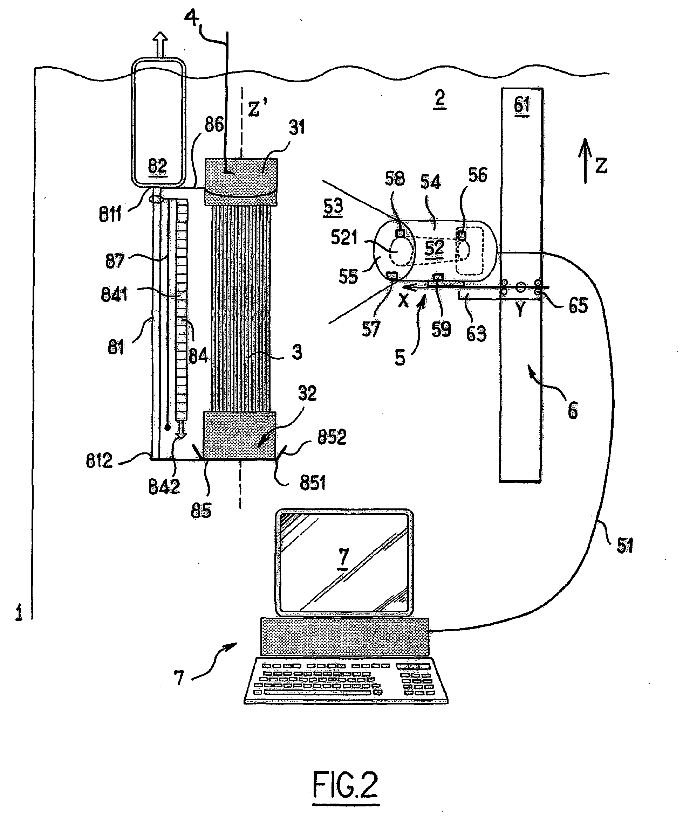

La figure 2 représente schématiquement un exemple possible d'un dispositif d'inspection d'un assemblage 3 de combustible dans une piscine 1 d'une installation nucléaire.

Le dispositif comporte principalement un capteur 5 d'images et une perche 81.

Le capteur 5 comporte un champ d'observation 53.

La perche 81 comporte au moins une fixation 85 amovible à l'assemblage 3, et une graduation 84 de référence s'étendant selon un axe Z parallèle à un axe Z' longitudinal de l'assemblage 3. La graduation est par exemple constituée de divisions repérées avec un écartement de l'ordre de 1 mm par exemple. D'autres valeurs d'écartement peuvent bien entendu être prévues. Une métrologie préalable permet de connaître la position de certaines divisions de référence avec une grande précision (±0.2 mm).

La perche 81 est fixée, par des moyens de fixation 85 et 86, de façon amovible sur l'assemblage 3, de sorte que le capteur 5 d'images puisse observer dans son champ 53 à la fois la perche 81 et l'assemblage 3.

Comme le montre la figure 2, la perche 81 est fixée de façon amovible sur l'assemblage 3, alors que l'assemblage 3 est porté par un grappin 4 d'un pont passerelle et est suspendu au pont passerelle à une profondeur intermédiaire dans la piscine 1. Ainsi, l'invention permet de se dispenser de moyens de support lourds et encombrants : le support de l'assemblage est assuré par le grappin 4, déjà présent dans l'installation.

La fixation de la perche 81 sur l'assemblage s'effectue avec une précision de 1 à 2mm.

Le principe de mesure consiste à déterminer, pour chaque extrémité des grandes distances à mesurer (par exemple la distance entre des embouts, le déport entre les embouts, l'altitude d'une grille de l'assemblage, etc.), la distance entre cette extrémité de l'assemblage et une division de la graduation 84 parallèle à la distance à mesurer. Pour les petites distances à mesurer (par exemple la distance entre un crayon et chaque embout, la hauteur d'un ressort de maintien, la flèche de la grille, la largeur de la grille ou l'espace entre deux crayons par exemple), la mesure est effectuée directement sur une seule prise de vue, le grandissement de l'image étant déterminé par une partie de la graduation située dans le champ 53 de la prise de vue.

Pour ce faire, le capteur 5 d'images acquiert une prise de vue à fort grandissement et haute définition, avec dans son champ d'observation 53 d'une part l'extrémité de la distance à mesurer et d'autre part la division la plus proche de la graduation 84.

La métrologie est ensuite effectuée en différé sur la prise de vue, grâce à des moyens de traitement et de commande 7 décrits plus en détail dans la suite de la présente description.

De préférence, le capteur 5 d'images est un appareil photographique numérique 52 à mise au point automatique, muni d'un téléobjectif 521 motorisé à focale variable. Très préférentiellement, l'appareil 52 est compris dans un cylindre 54 étanche (jusqu'à 10 bars) équipé en face avant d'un verre optique 55. Le cylindre 54 comporte également une caméra 56 numérique montée sur le viseur de l'appareil 52, un capteur 57 de pression pour le repérage de l'altitude du capteur 5, un projecteur 58 d'éclairage, un niveau 59 à bulle pour le réglage de l'horizontalité du capteur 5.

Le capteur 5 d'images est monté sur une table 630. La table 630 est montée sur un panier 63, lui-même monté sur un rail 61 généralement vertical parallèle à l'axe Z' longitudinal de l'assemblage 3. Le rail 61 et le panier 63 font partie d'un équipement standard de la piscine nommé « descenseur » 6. Le panier 63 peut ainsi se déplacer sur le rail 61 grâce aux moyens de déplacement 65. Le dispositif d'inspection est donc considérablement simplifié et allégé par rapport au dispositif de l'art antérieur. Il n'est pas prévu de moyens spécifiques de déplacement du capteur.

La table 630 est apte à déplacer le capteur 5 selon plusieurs axes. Ainsi, la table 630 peut déplacer le capteur 5 d'une part dans un plan XY perpendiculaire à l'axe Z (autrement dit suivant un axe horizontal parallèle à la face de l'assemblage), et d'autre part autour d'un axe Y perpendiculaire à l'axe Z (afin de pouvoir régler l'horizontalité de son axe optique).

En général, le grappin 4 place l'assemblage 3, et donc la perche 81, à environ 2 m de distance du descenseur 6 portant le capteur 5.

La perche 81 est par exemple constituée d'un ensemble de tronçons de perches, assemblées avec précision, servant d'ossature. Elle comporte deux extrémités, respectivement supérieure 811 et inférieure 812.

L'extrémité inférieure 812 est reliée à une fixation 85 amovible à l'assemblage. La fixation 85 comporte un réceptacle 851 de la base 32 de l'assemblage 3. Le réceptacle 851 est sensiblement de forme complémentaire de la base 32, avec des rebords 852, de sorte qu'une fois en place, la fixation 85 soit relativement stable, mais toujours amovible. Du fait de la forme du réceptacle 851, la mise en place et le retrait de la fixation 85 sont aisés.

A une altitude intermédiaire appropriée, la perche 81 est équipée d'une fourche 86 apte à se fixer de manière amovible à un sommet 31 de l'assemblage. De même que le réceptacle 851, la fourche 86 est sensiblement de forme complémentaire du sommet 31. La fourche 86 est mise en place et retirée de façon aisée, tout en étant relativement stable une fois en place. La position de la fourche 86 par rapport à la perche 81 est réglable, et de ce fait le dispositif peut s'adapter à différentes longueurs d'assemblages, comme par exemple 4 m (900 MW) ou 5 m (1300 MW).

L'extrémité supérieure 811 est de plus, préférentiellement, reliée à un flotteur 82 qui équilibre le poids de la perche 81, ce qui facilite la manipulation de la perche, tout en exerçant une légère poussée verticale qui en assure le maintien sur l'assemblage. Le flotteur 82 permet également la flottaison de la perche 81 dans la piscine 1 lorsqu'elle n'est plus fixée à l'assemblage 3 une fois les mesures effectuées.

De préférence, la graduation 84 comporte un mètre ruban 841 lesté par un poids 842.

La perche 81 comporte également préférentiellement un fil à plomb 87.

On rappelle que le dispositif comporte des moyens 7 de traitement et de commande. Les moyens 7 permettent un traitement des prises de vue acquises par le capteur 5 d'images. Ils comportent également une chaîne 51 de transmission numérique entre l'appareil photographique 52 et les moyens 7 de traitement et de commande. La chaîne 51 est par exemple une liaison par câble de type USB. Les moyens 7 de traitement et de commande sont par exemple un micro-ordinateur.

Les moyens 7 sont préférentiellement équipés :
● d'un logiciel de commande de l'appareil 52 (en général fourni avec l'appareil 52),
● d'une interface de commande de la table 630 et du projecteur 58,
● d'un logiciel de prise de vue, permettant l'importation, la visualisation, la dénomination et la mémorisation de toutes les prises de vue nécessaires à la métrologie complète de l'assemblage 3,
● d'un logiciel de mesure permettant la réalisation de toutes les mesures à partir de métrologies réalisées sur les prises de vue précédemment acquises,
● d'un logiciel de mise en forme des résultats de mesure (rapport de mesure) et de contrôle technique des mesures.

Toutes les mesures sont effectuées par métrologie sur image, en mesurant, en pixels, la distance entre la cible sur l'assemblage et la graduation. L'étalonnage du grandissement de la photo est effectué directement, par proportionnalité, à partir de la graduation qui est dans le champ. Il n'y a donc pas d'étalonnage préalable.

## Revendications

1. Dispositif d'inspection d'un assemblage (3) de combustible dans une piscine (1) d'une installation nucléaire équipée d'un grappin (4) de déplacement et de suspension de l'assemblage dans la piscine, comportant
- un capteur (5) d'images comportant un champ (53) d'observation, et
- une perche (81) comportant une graduation (84) de référence s'étendant selon un axe (Z) parallèle à un axe longitudinal de l'assemblage,
de sorte que le capteur (5) d'images puisse observer dans son champ (53) à la fois la perche (81) et l'assemblage (3),
ledit dispositif étant **caractérisé en ce que** la perche (81) comporte des moyens (85, 86) de fixation aptes à la fixer de manière amovible à l'assemblage (3), lorsque ce dernier est suspendu dans la piscine par le grappin.

2. Dispositif selon la revendication 1, dans lequel la perche comporte deux extrémités (811, 812), les moyens (85, 86) de fixation amovible comportant un réceptacle d'une base (32) de l'assemblage (3), relié à au moins une extrémité (812) de la perche (81).

3. Dispositif selon la revendication 2, dans lequel une autre extrémité (811) de la perche est fixée à un flotteur (82).

4. Dispositif selon l'une des revendications 2 ou 3, dans lequel les moyens (85, 86) de fixation comportent une fourche (86) apte à se fixer de manière amovible à un sommet (31) de l'assemblage.

5. Dispositif selon l'une des revendications 1 à 4, dans lequel la graduation (84) comporte un mètre ruban (841) lesté par un poids (842).

6. Dispositif selon l'une des revendications 1 a 5, dans lequel le capteur (5) d'images est un appareil photographique (52).

7. Dispositif selon la revendication 6, dans lequel l'appareil photographique est un appareil numérique à haute définition muni d'un téléobjectif motorisé.

8. Dispositif selon la revendication 6 ou 7, comportant
des moyens (7) de traitement et de commande des images acquises par le capteur (5) d'images et
une chaîne (51) de transmission numérique entre l'appareil photographique (52) et les moyens (7) de traitement et de commande.

9. Dispositif selon l'une des revendications 1 à 8, dans lequel le capteur (5) d'images est monté sur une table (630) apte à déplacer le capteur d'une part dans un plan (XY) perpendiculaire à l'axe (Z) parallèle à l'axe longitudinal de l'assemblage et
d'autre part autour d'un axe (Y) perpendiculaire à l'axe (Z) parallèle à l'axe longitudinal de l'assemblage, afin de pouvoir régler l'horizontalité du capteur.

10. Dispositif selon l'une des revendications 1 à 9, dans lequel le capteur (5) d'images est monté sur un panier (63) monté sur un rail (6) parallèle à l'axe longitudinal de l'assemblage, le panier (63) étant apte à déplacer le capteur (5) parallèlement à l'axe longitudinal (Z') de l'assemblage (3).

11. Dispositif selon la revendication 10, dans lequel le panier (63) et le rail (61) font partie d'un equipement standard de la piscine d'une installation nucléaire, nommé « descenseur ».

12. Procédé d'inspection d'au moins un assemblage (3) de combustible dans une piscine (1) d'une installation nucléaire équipée d'un grappin (4) de déplacement et de suspension de l'assemblage (3) dans la piscine, comportant une étape selon laquelle:
- un capteur (5) d'images comportant un champ (53) d'observation est monté à proximité de l'assemblage (3), ledit procédé étant **caractérisé en ce qu'**il comporte en outre les étapes selon lesquelles:
- une perche (81) comportant une graduation (84) de référence et s'étendant selon un axe (Z) parallèle à un axe longitudinal de l'assemblage est fixée, grâce à des moyens (85, 86) de fixation aptes à fixer la perche (81) de manière amovible, à l'assemblage, lorsque ce dernier est suspendu dans la piscine par le grappin,
- le capteur (5) d'images observe à la fois la perche (81) et l'assemblage (3) dans son champ (53).

## Claims

1. A device for inspecting a fuel assembly (3) in a pool (1) of a nuclear plant equipped with a grapnel (4) for displacing and suspending the assembly in the pool, including
- an image sensor (5) including a field (53) of observation, and
- a boom (81) including a reference graduation (84) extending along an axis (Z) parallel to a longitudinal axis of the assembly,
so that the image sensor (5) may observe in its field (53) both the boom (81) and the assembly (3),
said device being **characterized in that** the boom (81) includes fastening means (85, 86) able to removably fasten it to the assembly (3), when the latter is suspended in the pool by the grapnel.

2. The device according to claim 1, wherein the boom includes two ends (811, 812), the removable fastening means (85, 86) including a receptacle of a base (32) of the assembly (3), connected to at least one end (812) of the boom (81).

3. The device according to claim 2, wherein another end (811) of the boom is fastened to a float (82).

4. The device according to any of claims 2 or 3, wherein the fastening means (85, 86) include a fork (86) capable of being removably fastened to a top (31) of the assembly.

5. The device according to any of claims 1 to 4, wherein the graduation (84) includes a tape measure (841) ballasted with a weight (842).

6. The device according to any of claims 1 to 5, wherein the image sensor (5) is a still camera (52).

7. The device according to claim 6, wherein the still camera is a high definition digital still camera provided with a motorized telephoto lens.

8. The device according to claim 6 or 7, including
means (7) for processing and controlling the images acquired by the image sensor (5) and
a digital transmission chain (51) between the still camera (52) and the processing and control means (7).

9. The device according to any of claims 1 to 8, wherein the image sensor (5) is mounted on a table (630) capable of displacing the sensor
in a plane (XY) perpendicular to the axis (Z) parallel to the longitudinal axis of the assembly on the one hand, and
around an axis (Y) perpendicular to the axis (Z) parallel to the longitudinal axis of the assembly, on the other hand, in order to be able to adjust the horizontality of the sensor.

10. The device according to any of claims 1 to 9, wherein the image sensor (5) is mounted on a basket (63) mounted on a rail (6) parallel to the longitudinal axis of the assembly, the basket (63) being capable of displacing the sensor (5) parallel to the longitudinal axis (Z') of the assembly (3).

11. The device according to claim 10, wherein the basket (63) and the rail (61) are part of a standard piece of equipment of the pool of a nuclear plant, called a "lowerator".

12. A method for inspecting at least one fuel assembly (3) in a pool (1) of a nuclear plant, equipped with a grapnel (4) for displacing and suspending the assembly (3) in the pool, including a step according to which:
an image sensor (5) including a field (53) of observation, is mounted in proximity to the assembly (3),
said method being **characterized in that** it further includes steps according to which:
- a boom (81) including a reference graduation (84) and extending along an axis (Z) parallel to a longitudinal axis of the assembly is fastened by fastening means (85, 86) able to removably fasten the boom (81) to the assembly, when the latter is suspended in the pool by the grapnel,
- the image sensor (5) observes both the boom (81) and the assembly (3) in its field (53).

## Patentansprüche

1. Vorrichtung zur Prüfung eines Brennelements (3) in einem Lagerbecken (1) einer Nuklearanlage, die mit einem Greifer (4) zum Umsetzen und Aufhängen des Brennelements in dem Lagerbecken ausgestattet ist, umfassend
- einen Bilddetektor (5) mit einem Beobachtungsfeld (53) und
- eine Stange (81) mit einer Referenz-Graduierung (84), die sich entlang einer Achse (Z) parallel zur Längsachse des Brennelements erstreckt,
derart, dass der Bilddetektor (5) in seinem Beobachtungsfeld (53) sowohl die Stange (81) als auch das Brennelement (3) erfassen kann, wobei die Vorrichtung **dadurch gekennzeichnet ist, dass** die Stange (81) Befestigungsmittel (85, 86) umfasst, die dazu geeignet sind, die Stange abnehmbar an dem Brennelement zu befestigen, wenn dieses in dem Lagerbecken an dem Greifer hängt.

2. Vorrichtung nach Anspruch 1, wobei die Stange zwei Enden (811, 812) aufweist und die abnehmbaren Befestigungsmittel (85, 86) eine Aufnahme für ein unteres Ende (32) des Brennelements (3) aufweisen, die mit mindestens einem Ende (812) der Stange (81) verbunden ist.

3. Vorrichtung nach Anspruch 2, wobei ein anderes Ende (811) der Stange an einem Schwimmer (82) befestigt ist.

4. Vorrichtung nach einem der Ansprüche 2 oder 3, wobei die Befestigungsmittel (85, 86) eine Gabel (86) umfassen, die dazu geeignet ist, abnehmbar an einem oberen Ende (31) des Brennelements einzugreifen.

5. Vorrichtung nach einem der Ansprüche 1 bis 4, wobei die Graduierung (84) ein Messband (841) umfasst, das mit einem Gewicht (842) beschwert ist.

6. Vorrichtung nach einem der Ansprüche 1 bis 5, wobei der Bilddetektor (5) ein Photoapparat (52) ist.

7. Vorrichtung nach Anspruch 6, wobei der Photoapparat ein hochauflösender Digitalapparat mit motorgetriebenem Teleobjektiv ist.

8. Vorrichtung nach Anspruch 6 oder 7, umfassend
Mittel (7) zur Verarbeitung und Steuerung der von dem Bilddetektor (5) erfassten Bilder, und
eine digitale Übertragungsleitung (51) zwischen dem Photoapparat (52) und den Verarbeitungs- und Steuermitteln (7).

9. Vorrichtung nach einem der Ansprüche 1 bis 8, wobei der Bilddetektor (5) auf einen Tisch (630) montiert ist, der dazu geeignet ist, den Detektor zu verschieben,
einerseits in einer Ebene (XY) senkrecht zur Achse (Z), die parallel zur Längsachse des Brennelements verläuft, und
andererseits um eine Achse (Y), die senkrecht zur parallel zur Brennelemente-Längsachse verlaufenden Achse (Z) verläuft, um die Horizontalität des Detektors einstellen zu können.

10. Vorrichtung nach einem der Ansprüche 1 bis 9, wobei der Bilddetektor (5) auf einen Korb (63) montiert ist, der auf eine Schiene (6) montiert ist, die parallel zur Längsachse des Brennelements verläuft, wobei der Korb (63) dazu geeignet ist, den Detektor (5) parallel zur Längsachse (Z') des Brennelements (3) zu verschieben.

11. Vorrichtung nach Anspruch 10, wobei der Korb (63) und die Schiene (61) zur Standardausrüstung des Lagerbeckens einer Nuklearanlage gehören und als "Senkvorrichtung" bezeichnet werden.

12. Verfahren zur Prüfung mindestens eines Brennelements (3) in einem Lagerbecken (1) einer Nuklearanlage, die mit einem Greifer (4) zum Umsetzen und Aufhängen des Brennelements (3) in dem Lagerbecken ausgestattet ist, umfassend einen Schritt, in welchem
- ein Bilddetektor (5) mit einem Beobachtungsfeld (53) in der Nähe des Brennelementes (3) angebracht wird,
wobei das Verfahren **dadurch gekennzeichnet ist, dass** es außerdem die folgenden Schritte umfasst:
- eine Stange (81) mit einer Referenz-Graduierung (84), die sich entlang einer Achse (Z) parallel zu einer Längsachse des Brennelements erstreckt, wird mit Befestigungsmitteln (85, 86), die dazu geeignet sind, die Stange (81) abnehmbar zu befestigen, an dem Brennelement befestigt, wenn dieses an dem Greifer in dem Lagerbecken hängt,
- der Bilddetektor (5) erfasst sowohl die Stange (81) als auch das Brennelement (3) in seinem Beobachtungsfeld (53).
